# EUROPÄISCHE PATENTSCHRIFT

(11) **EP 2 832 210 B1**
(45) Veröffentlichungstag und Bekanntmachung des Hinweises auf die Patenterteilung: **18.10.2017**
(21) Anmeldenummer: 14179049.3
(22) Anmeldetag: 30.07.2014
(51) Int. Cl.: A01K 1/00

(54) **Trennvorrichtung**
Separating device
Dispositif de séparation

(30) Priorität: 30.07.2013 DE 202013103422 U
(43) Veröffentlichungstag der Anmeldung: 04.02.2015
(73) Patentinhaber: Braun Stalleinrichtungen - Landtechnik - Stahlbau GmbH, 83620 Feldkirchen-Westerham (DE)
(72) Erfinder: Braun, Hans, 83620 Feldkirchen-Westerham (DE)
(74) Vertreter: Weickmann & Weickmann PartmbB

(56) Entgegenhaltungen:
- DE-A1- 4 009 469
- DE-A1- 19 750 905
- DE-U1- 9 113 830
- GB-A- 2 470 425
- US-B1- 6 467 434

## Beschreibung

### I. Anwendungsgebiet

Die Erfindung betrifft eine Trennvorrichtung für die Steh- und Liegeplätze, den sog. Boxen, von Großvieh, insbesondere von Kühen. In der Regel sind diese Steh- und Liegeplätze Seite an Seite nebeneinander in Reihen, die in Längsrichtung verlaufen, angeordnet.

### II. Technischer Hintergrund

Die Plätze für die einzelnen Kühe müssen körperlich abgetrennt werden, um jeder Kuh ihren eigenen Platz frei zu halten und auf diese Art und Weise unter anderem Kämpfe der Kühe untereinander um ihren Platz zu vermeiden. Dabei werden in aller Regel aus Rohren gebogene, beispielsweise U-förmige, Trennbügel verwendet, die in einer vertikalen Ebene zwischen den einander zugewandten Seiten zweier benachbarter Plätze angeordnet sind und in Querrichtung parallel zu den Kühen verlaufen.

Diese Trennbügel sind in aller Regel indirekt gegenüber dem Untergrund, meist einem Betonboden, befestigt, indem sie an einer Tragvorrichtung, die ihrerseits gegenüber dem Untergrund oder dem umgebenden Gebäude fixiert ist, befestigt sind, die im Untergrund einbetoniert oder gegenüber dem Untergrund oder dem umgebenden Gebäude verschraubt ist.

Die Tragvorrichtung ist beispielsweise eine vertikal aufragende Standsäule, und/oder eine im Kopfbereich der Kühe längs verlaufende, über mehrere Steh- und Liegeplätze hinweg verlaufende größeren Tragvorrichtung, z.B. ein Nackenrohr, die ihrerseits an mehreren Punkten gegenüber dem umgebenden Gebäude oder dem Untergrund fixiert ist.

Das Problem bei diesen Trennbügeln besteht darin, dass die Kühe in ihre Box gehen und sich anschließend beim Ablegen seitlich fallen lassen, und dabei mit ihrem hohen Körpergewicht gegen den Trennbügel, insbesondere den unteren Holm des U-förmigen Trennbügels, drücken und diesen mit einer hohen Kraft zur Seite drücken.

Da dies in der Regel mehrfach an einem Tag geschieht, wird dadurch die Befestigung entweder des Trennbügels gegenüber der Tragvorrichtung wie etwa einer Standsäule, beschädigt oder zerstört, oder die Fixierung der gesamten Tragvorrichtung gegenüber dem Untergrund beschädigt oder zerstört.

Bei allen Veränderungen an einer Trennvorrichtung muss beachtet werden, dass dadurch kein Verletzungsrisiko für das Vieh gegeben sein darf, insbesondere keine scharfkantigen oder spitzen, kleinflächigen Einzelteile von der Trennvorrichtung vorstehen dürfen.

In diesem Zusammenhang ist es aus der DE 9113 830 U1 bereits bekannt, dass die vertikale Standsäule zweiteilig ausgebildet ist und der obere Teil mit den daran befestigten Trennbügel gegenüber dem unteren Teil begrenzt verschwenkt werden kann.

Aus der GB 24705425 A sind die einzelnen Trennbügel mittels einer Federeinheit direkt am Untergrund befestigt, sodass eine Standsäule im Wesentlichen fehlt, und auch hier ist der gesamte Trennbügel gegenüber dem Untergrund u.a. um eine aufrechte Achse begrenzt verschwenkbar.

Ferner ist aus der US 6467434 B1 eine Trennvorrichtung bekannt, bei der an jeder Standsäule beidseits je ein U-förmiger Trennbügel sowohl mit seinem oberen als auch mit seinem unteren, jeweils etwa horizontal verlaufenden, Ende befestigt ist.

Darüber hinaus sind Vorrichtungen bekannt, bei denen die Verschwenkbarkeit und anschließende Rückstellung in die Normallage durch elastische Materialien, wie Gummielemente erreicht wird.

So ist es aus der DE 19759905 A1 bekannt, die in etwa horizontal verlaufenden Trennbügel zwischen zwei Platten zu verschrauben, und beidseits des Trennbügels zu den Platten hin jeweils eine Gummiplatte anzuordnen, wodurch eine begrenzte Verschwenkbarkeit des Trennbügels um eine aufrechte Achse gegeben ist.

In der DE 4009469 A1 - die den nächstreichenden Stand der Technik bildet - werden solche elastischen Gummielemente dazu eingesetzt, das der an einem vertikalen Außenrohr befestigte Trennbügel gegenüber einem vertikalen Innenrohr begrenzt verdreht werden kann und durch die zusammengepressten Gummielemente nach Wegfall der Belastung wieder in die Normallage zurückgestellt wird.

### III. Darstellung der Erfindung

### a) Technische Aufgabe

Es ist daher die Aufgabe gemäß der Erfindung, eine Trennvorrichtung zu schaffen, die eine häufige seitliche Belastung durch das Großvieh besser verkraftet als bei den bisher bekannten Lösungen.

### b) Lösung der Aufgabe

Diese Aufgabe wird durch die Merkmale des Anspruchs 1 gelöst. Vorteilhafte Ausführungsformen ergeben sich aus den Unteransprüchen. Die im vorangegangenen Teil enthaltenen Definitionen gelten auch für die nachfolgende Erfindung.

Durch eine begrenzte seitliche Auslenkbarkeit in Längsrichtung der Trennvorrichtung, also quer zur Ebene, in der sich der Trennbügel befindet, kann der Trennbügel einer seitlichen Kraftbeaufschlagung ausweichen. Die seitliche Auslenkbarkeit kann eine Verschwenkbarkeit des Trennbügels um eine Schwenkachse sein, die in der Ebene des Trennbügels liegt und vorzugsweise aufrecht, insbesondere vertikal, steht.

Sobald die Kraftbeaufschlagung, z.B. durch eine anliegende Kuh, wieder beendet ist, geht der Trennbügel wieder in seine unbelastete Normallage, in der Regel in der Mitte zwischen zwei Boxen, zurück aufgrund der Rückstellvorrichtung. Der Bügel bleibt dadurch nicht in die andere Box verschwenkt und engt nicht dauerhaft den Raum in dieser anderen Box ein.

In der Rückstellvorrichtung wird eine den Trennbügel in die Normallage rückstellende Kraft aufgebracht.

Diese wird von einem oder mehreren elastischen Elementen erreicht, welche beidseits der Normallage eingebaut sind, sodass durch die beiden elastischen Elemente eine automatische Zentrierung in die Normallage erfolgt.

Das elastische Element kann ein elastisches Material wie etwa ein Gummiblock sein oder auch eine Feder, beispielsweise aus Stahl, insbesondere eine Drehfeder. Insbesondere sollte eine formschlüssige Befestigung, insbesondere Verschraubung, des Trennbügels gegenüber der Tragvorrichtung nicht durch das elastische Element hindurch erfolgen.

Wenn der Trennbügel auf Grund der seitlichen Auslenkbarkeit nicht mehr so hohe Belastungen bis zur Befestigung der Trennvorrichtung gegenüber dem Untergrund weitergibt, kann die Trennvorrichtung, insbesondere die Tragvorrichtung für den Trennbügel, gegenüber dem Untergrund verschraubt statt einbetoniert werden, was wesentlich weniger Aufwand erfordert, aber dann von der Festigkeit dennoch ausreicht.

Die Schwenkachse, um die der Trennbügel begrenzt verschwenkbar ist, und die Rückstellvorrichtung zum Zurückstellen in die Normallage sind in der Regel nahe beisammen, insbesondere in einer Baugruppe integriert, verwirklicht als Auslenk- und Rückstellvorrichtung.

Die Rückstellvorrichtung und insbesondere eine kombinierte Auslenk- und Rückstellvorrichtung kann innerhalb der Trennvorrichtung an verschiedenen Stellen angeordnet werden:
- eine Möglichkeit ist die Anordnung zwischen Trennbügel und dessen Tragvorrichtung, sodass nur der Trennbügel von der Normallage ausgelenkt wird, während die Tragvorrichtung eine feste Position beibehält. Falls der Trennbügel zwei freie Enden aufweist, also beispielsweise U-förmig gestaltet ist, sollte eine solche Rückstellvorrichtung zwischen jedem der beiden freien Enden und der Tragvorrichtung vorhanden sein.
- Die andere Möglichkeit besteht darin, die Rückstellvorrichtung bzw. die integrierte Auslenk- und Rückstellvorrichtung in der Tragvorrichtung oder zwischen der Tragvorrichtung und dem Untergrund anzuordnen. Dann wird der Teil der Tragvorrichtung oberhalb der Rückstellvorrichtung, evtl. die gesamte Tragvorrichtung, zusammen mit dem Trennbügel bei entsprechender Kraftbeaufschlagung um die senkrechte Schwenkachse aus der Normallage ausgelenkt.

Hinsichtlich der konstruktiven Ausführung der Auslenk- und Rückstellvorrichtung, sind mehrere Bauformen möglich, wobei zu beachten ist, dass keine nach außen vorstehenden, spitzen oder scharfkantigen Teile vorhanden sein dürfen, an denen sich eine Kuh verletzten könnte. Die Rückstellvorrichtung umfasst eine Rohr-in-Rohr-Anordnung, bei der das Innenrohr relativ zum umgebenden, in gleicher Richtung wie das Innenrohr verlaufenden, Außenrohr entweder um seine Längsachse oder um eine Querachse hierzu als Schwenkachse verschwenkbar ist. Dabei ist das eine Rohr direkt oder indirekt fixiert gegenüber dem Gebäude oder gegenüber dem Untergrund und dient als Führung für das andere, darin oder darum verdrehbare Rohr. Zwischen Innenrohr und Außenrohr ist ein radialer Abstand vorhanden, und in diesem Abstand sind das eine oder die mehreren elastischen Elemente angeordnet. Damit das elastische Element nicht aus dem radialen Abstand axial herausrutschen kann, ist die offene Seite des radialen Zwischenraumes zwischen Innenrohr und Außenrohr mittels eines Deckels abgedeckt, der an einem der beiden Rohre in axialer Richtung und/oder in Umfangsrichtung fixiert sein kann.

Damit das Innenrohr aus dem Außenrohr nicht herausgezogen werden kann, ist eine Sicherung gegen Herausziehen vorgesehen, z.B. eine querverlaufende Sicherungsschraube.

Bei einer Anordnung am vertikalen Teil der Tragvorrichtung, nicht gemäß der Erfindung, beispielsweise an der Standsäule, ist die Rohr-in-Rohr-Anordnung mit ihrer Längsachse vorzugsweise aufrecht angeordnet und ebenso steht die Schwenkachse aufrecht, und es kann das eine der beiden Rohre, also Innenrohr oder Außenrohr, auf dem Untergrund, beispielsweise einem erhöhten Sockel, fixiert sein, während an dem anderen Rohr der Trennbügel befestigt, insbesondere verschweißt, ist.

Wenn die Rohr-in-Rohr-Anordnung am Übergang zwischen der Tragvorrichtung, z.B. der Standsäule, und dem Trennbügel angeordnet wird, ist die Rohr-in-Rohr-Anordnung mit ihrer Längsachse horizontal angeordnet und eines ihrer beiden Rohre an der Tragvorrichtung fixiert, vorzugsweise verschweißt, während das andere Rohr an dem Trennbügel fixiert, insbesondere verschweißt ist.

Dabei verläuft die Schwenkachse quer zur axialen Richtung der Rohr-in-Rohr-Anordnung und aufrecht. Vorzugsweise weist sowohl das Außenrohr als auch das Innenrohr einen polygonen Querschnitt auf, beispielsweise einen Viereck-Querschnitt, und die elastischen Elemente zumindest in den Eckbereichen zwischen den beiden Querschnitten angeordnet sein.

Wenn die Rohr-in-Rohr-Anordnung mit ihrer Längsrichtung quer zur Schwenkachse angeordnet ist, kommt es auf den Querschnitt der beiden Rohre nicht an:
Sowohl Außenrohr als auch Innenrohr können rund oder polygon gestaltet sein, und sie können auch qualitativ unterschiedliche Querschnitte besitzen,
also beispielsweise ein rundes in einem polygonen Rohr angeordnet sein oder umgekehrt.

Die elastischen Elemente dazwischen können entsprechend gestaltete einzelne Gummiblöcke sein, oder auch ein einziges Formteil, welches den Zwischenraum zwischen Innenrohr und Außenrohr hinsichtlich des Querschnittes im Wesentlichen ausfüllt, oder ein solches Formteil kann für die leichtere Einbringbarkeit auch in zwei Hälften aufgeteilt sein.

Erfindungsgemäß kann der Trennbügel jedoch auch nur mit seinem unteren Ende über eine solche Rückstellvorrichtung ausschwenkbar gegenüber der Tragvorrichtung befestigt sein, während die oberen Enden der in Längsrichtung hintereinander angeordneten Trennbügel über ein in Längsrichtung durchgehendes Nackenrohr miteinander verbunden sind, und an dieser Verbindungsstelle keine Auslenkmöglichkeit und Rückstellvorrichtung benötigt wird, da beim seitlichen Ablegen einer Kuh primär der untere Schenkel des U-förmigen Trennbügels belastet wird und die Länge des Trennbügels ausreicht, um aufgrund von Verwindung des Trennbügels keine zu großen Kräfte in das obere Nackenrohr einzuleiten.

Die Tragvorrichtung besteht dann vorzugsweise aus einer Standsäule, die aber nur bis etwa auf die Höhe des unteren Endes des Trennbügels hoch reicht, sodass auf deren oberem stirnseitigen Ende oder auch seitlich daran, das Außenrohr der herzustellenden Rohr-in-Rohr-Anordnung horizontal aufgeschweißt ist, vorzugsweise in beide Richtungen über die Standsäule vorstehend. Als Innenrohr der Rohr-in-Rohr-Anordnung dient das untere Ende des Trennbügels.

Vorzugsweise sind Außenrohr als auch Innenrohr mit einem runden Querschnitt ausgestattet, sodass das wenigstens eine dazwischen einzubringende elastische Element in Form einer ringförmigen Gummibuchse gestaltet sein kann.

Wenn von der Standsäule nur in eine Richtung ein Trennbügel abragen soll, wird das untere Ende des Trennbügels soweit in das horizontale Außenrohr eingeschoben, dass es dieses vollständig durchdringt und auf der anderen Seite leicht vorsteht. Vorzugsweise an beiden Enden im Außenrohr ist dann jeweils eine ringförmige Gummibuchse angeordnet.

Wenn von der Tragsäule beidseitig je ein Trennbügel angeordnet werden soll, wird das untere Ende des Trennbügels nur soweit in das Außenrohr eingeschoben, dass es kurz vor dessen Längsmitte endet oder die beiden gegeneinander gerichteten unteren Enden der beiden Trennbügel aneinander stoßen.

Vorzugsweise ist auch dann zwischen Außenrohr und den Innenrohren an jedem Ende des Außenrohres nur jeweils eine elastische Gummibuchse angeordnet.

Beidseits des Außenrohres und an diesem jeweils stirnseitig eng benachbart, insbesondere anliegend, ist um das Rohr des Trennbügels herum als Ausziehsicherung eine Muffe oder eine Rohrschelle angeordnet, die gegenüber dem Rohr des Trennbügels festgezogen werden kann, sodass eine Relativverschiebung zwischen Außenrohr und Innenrohr in deren axialer Richtung verhindert wird.

### c) Ausführungsbeispiele

Ausführungsformen gemäß der Erfindung sind im Folgenden beispielhaft näher beschrieben. Es zeigen:

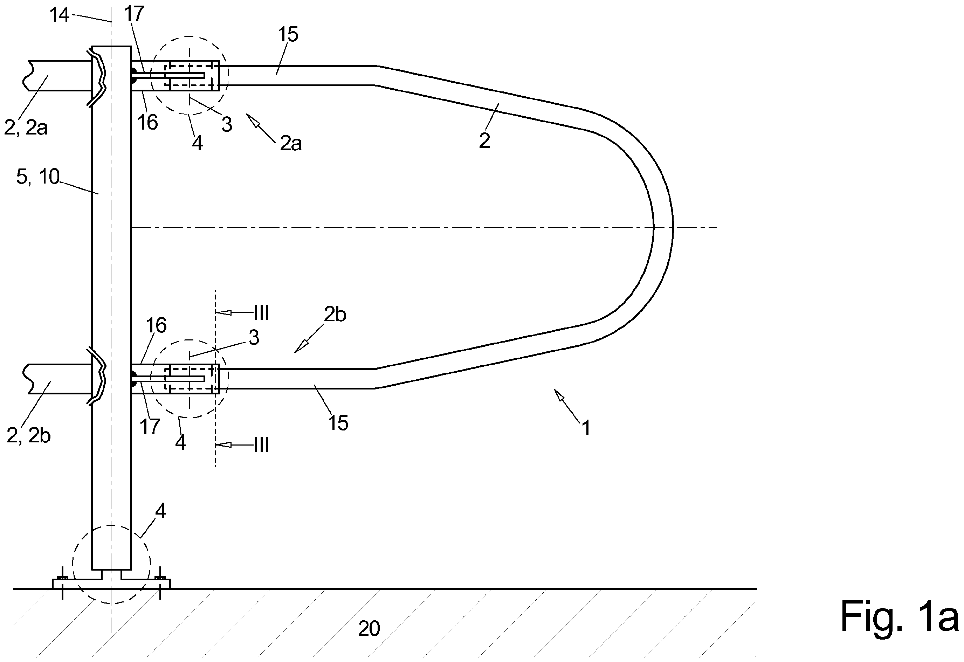

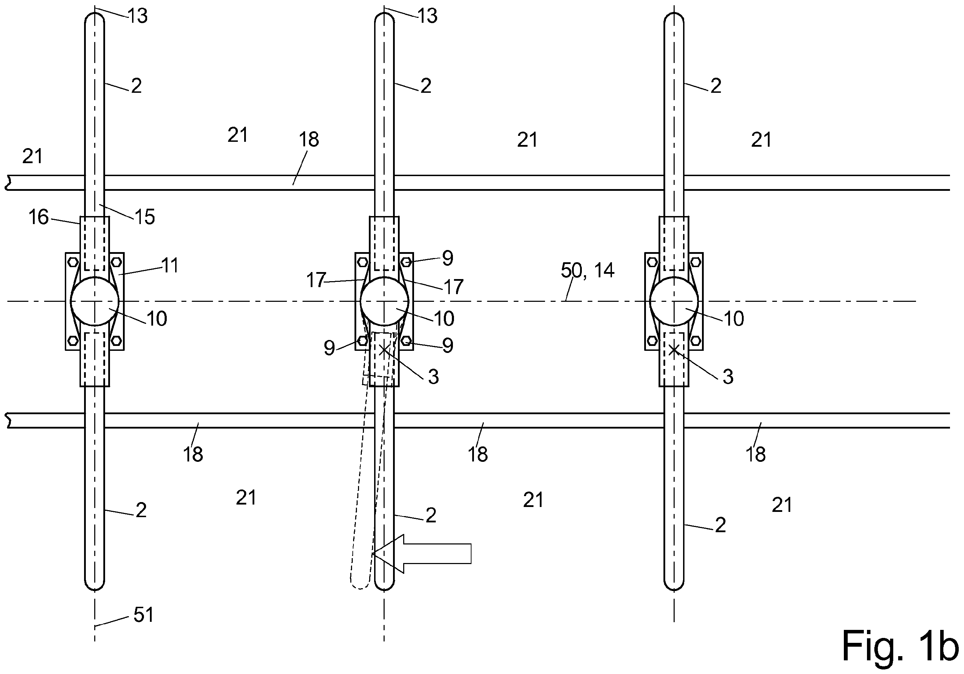

- Fig. **1**a:: eine erste Bauform einer Trennvorrichtung mit Blick auf die vertikale Ebene, in der der Trennbügel liegt,
- Fig. **1**b:: eine Aufsicht auf eine Trennvorrichtung mit mehreren Trennbügeln von oben,
- Fig. **2**:: eine zweite Bauform einer erfindungsgemäßen Trennvorrichtung mit Blick auf die vertikale Ebene, in der sich der Trennbügel befindet,
- Fig. **3**a-d:: Querschnitte durch verschiedene Rückstellvorrichtungen,
- Fig. **4**a, b:: Längsschnitte durch verschiedene Rückstellvorrichtungen,
- Fig. **5**:: eine Ansicht einer dritten Ausführungsform einer Rückstellvorrichtung
- Fig. **6**a - c:: Ansichten weiterer Bauformen der Trennvorrichtung.

Figur **1**a zeigt eine erste Bauform einer Trennvorrichtung **1** mit Blick in Längsrichtung **50** auf die vertikale Ebene **13,** in der sich der Trennbügel **2** befindet. Die Schenkel-Enden des U-förmigen Trennbügels **2** sind etwa horizontal angeordnet und parallel zueinander und sind jeweils einzeln mit einer Tragvorrichtung **5** hier in Form einer vertikalen Standsäule **10** verbunden, von der aus in der gegenüberliegenden Richtung, also symmetrisch zur vertikalen Symmetrieebene **14,** die durch die Standsäule **10** verläuft, nochmals der gleiche Trennbügel **2,** gegebenenfalls mit der gleichen Befestigung, angeordnet sein kann.

Figur **1**b zeigt in der Ansicht von oben eine Vielzahl von sich in Längsrichtung **50** aneinander seitlich anschließender solcher Trennvorrichtungen **1,** bestehend aus mehreren der symmetrisch ausgebildeten Trennvorrichtungen **1** gemäß Figur **1**a mit Abstand nebeneinander, sodass zwischen je zwei der Trennvorrichtungen **1** jeweils zwei Boxen **21** entstehen, einander gegenüberliegend bezüglich der Symmetrieebene **14.**

An einem der Trennbügel **2** ist die darauf einwirkende seitliche Kraft mit einem Pfeil eingezeichnet, wie sie beispielsweise beim seitlichen Ablegen einer Kuh aufgebracht wird, wodurch der Trennbügel **2** aus seiner Normallage - mittig zwischen den Boxen **21** verlaufend, also insbesondere im rechten Winkel von der Symmetrieebene **14** abregend - um die Schwenkachse **3** in die gestrichelte Lage verschwenkt wird, in der sein von der Standsäule **10** wegweisendes Ende schräg in eine der Boxen **21** hineinragt. Diese Belastung kann auf Dauer auch durch die seitlichen Versteifungsrippen **17** zwischen Trennbügel **2** und Standrohr **10 -** bei fest am Standrohr **10** verschweißtem Trennbügel **2 -** nicht aufgenommen werden.

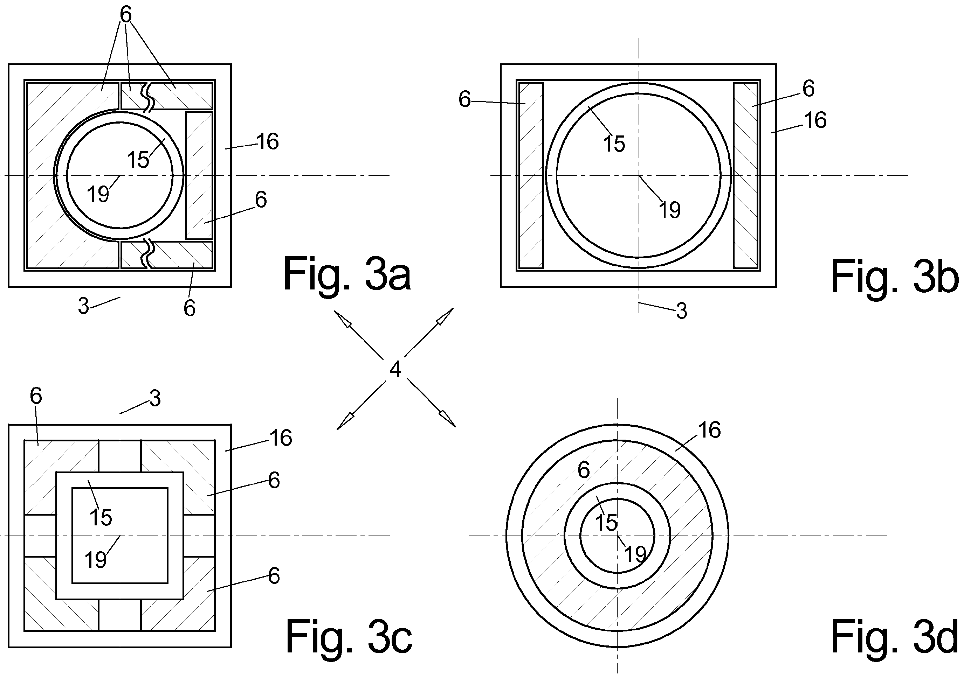

Deshalb sind die freien Enden **2**a, b des Trennbügels **2** nicht direkt an der Standsäule **10** angeschweißt, sondern bilden das Innenrohr **15** einer Rohr-in-Rohr-Anordnung, wie in den Figuren **3**a- d beispielhaft dargestellt, wobei das Außenrohr **16** ein vom Durchmesser her größerer Rohrstutzen ist, der mit einem Ende an der Standsäule **10** verschweißt ist, und in den vom anderen offenen Ende her das Innenrohr **15** in Form des freien Endes **2**a, b des Trennbügels **2** eingeschoben ist, oder umgekehrt.

Durch das radiale Spiel zwischen Innenrohr **15** und Außenrohr **16,** in dem sich wenigstens ein elastisches Element befindet, wodurch die Rohr-in-Rohr-Anordnung eine Rückstellvorrichtung **4** wird - wie besser anhand der Figuren **3**a - d zu erläutern - kann der Trennbügel **2** etwas zur Seite verschwenkt werden.

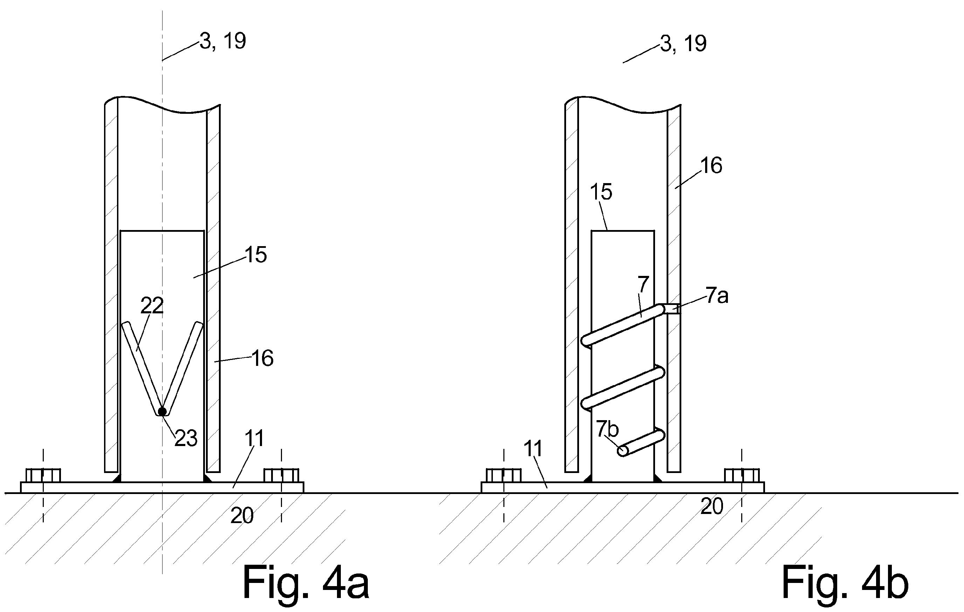

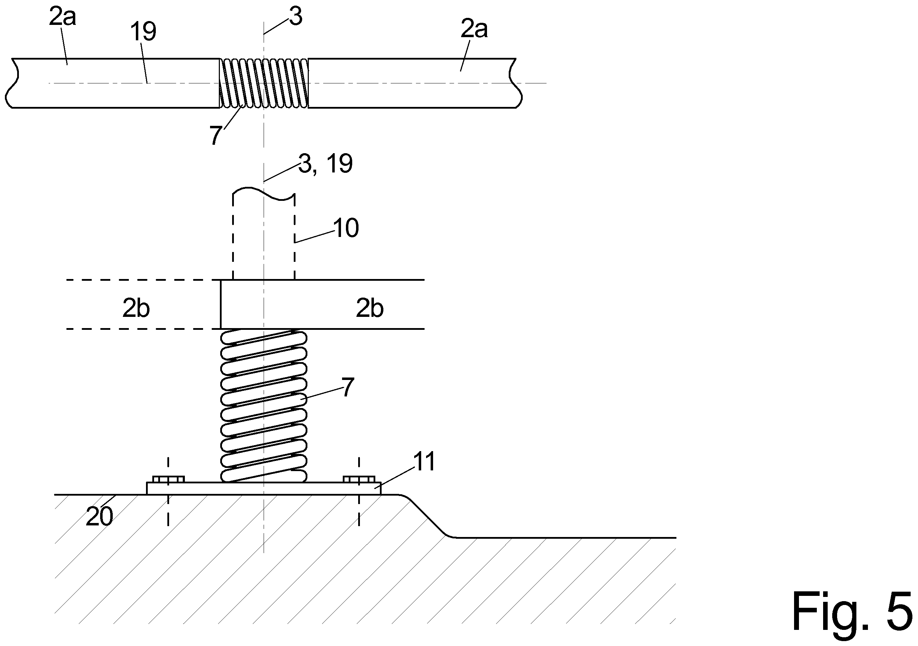

Statt am Übergang zwischen Trennbügel **2** und Standrohr **10** kann eine solche Verdreh- und Rückstellvorrichtung **4** auch am unteren Ende der Standsäule **10** vorhanden sein, sowohl alternativ als auch zusätzlich, wie im Detail in den Figuren **4**a, b oder Figur **5** dargestellt.

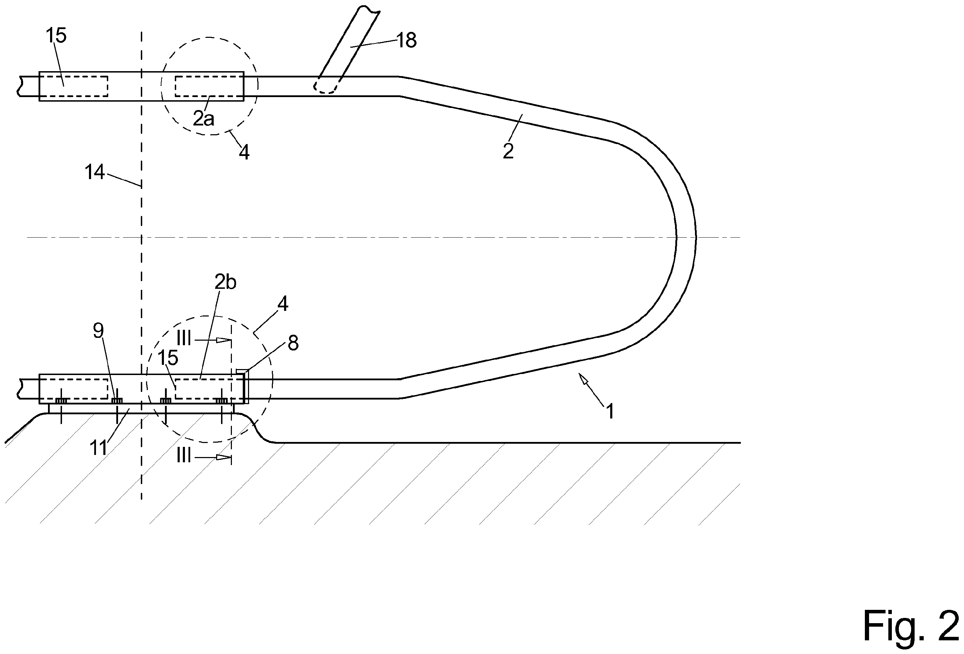

Figur **2**a zeigt bei gleicher Blickrichtung wie Figur **1**a eine weitere Bauform einer Trennvorrichtung **1,** bei der die freien Enden **2**a,b des in einer vertikalen Ebene **13** liegenden, mit den freien Enden horizontal ausgerichteten, Trennbügels **2** wiederum Teil einer Rohr-in-Rohr-Anordnung sind, wie sie im Detail beispielhaft in einigen Ausführungen in Figur **3** dargestellt sind.

Im Gegensatz zu Figur **1**a ist hier das Außenrohr **16** der Rohr-in-Rohr-Anordnung nicht mit einer Standsäule **10** verbunden, sondern das Außenrohr **16** der unteren Rohr-in-Rohr-Anordnung ist horizontal liegend auf einer ebenfalls horizontal liegenden Sockelplatte **11** verschweißt, die seitlich übersteht und Durchgangslöcher **9** zum Verschrauben mit dem Untergrund, insbesondere einem erhöhten Sockel des Untergrundes, aufweist.

Die obere Rohr-in-Rohr-Anordnung ist mit einer auf gleicher Höhe dazu fluchtenden Rohr-in-Rohr-Anordnung symmetrisch gegenüberliegend zur Symmetrieebene **14** verbunden, insbesondere einstückig ausgebildet, und ist zusätzlich in Querrichtung, also in Richtung parallel zur Symmetrieebene **14,** über wenigstens ein Nackenrohr **18** pro Box mit der im Abstand daneben liegenden anderen Rohr-in-Rohr-Anordnung verbunden.

In Figur **2** ist im unteren Bereich ferner ein Deckel **8** eingezeichnet, der den freien Zwischenraum zwischen Innenrohr **15** und Außenrohr **16** abdeckt, damit die dazwischen vorhandenen elastischen Elemente nicht axial herausrutschen können. Der Deckel **8** ist zumindest in axialer Richtung am Innenrohr **15** oder am Außenrohr **16** gesichert, sodass er ausreichend nah an der Stirnfläche des Außenrohrs **16** anliegt.

Falls die Verdreh- und Rückstellvorrichtung **4** - wie in den Figuren **1**a, b und Figur **2** dargestellt - als Rohr-in-Rohr-Anordnung gelöst ist, kann das freie Ende **2**a, b des Trennbügels **2** statt das Innenrohr **15** auch das Außenrohr **16** der Rohr-in-Rohr-Anordnung darstellen und umgekehrt das Außenrohr zum Beispiel am Standrohr **10** verschweißt sein.

Die Figuren **3**a - d zeigen verschiedene Varianten einer Verdrehvorrichtung **4** in Form einer Rohr-in-Rohr-Anordnung, die durch zusätzlich im Zwischenraum zwischen Innenrohr **15** und Außenrohr **16** angeordnete elastische Elemente zur Rückstellvorrichtung **4** wird und an den hiermit bezeichneten Stellen in den Figuren **1**a, b und Figur **2** eingesetzt werden können.

In Figur **3**a besteht das Außenrohr **16** aus einem Vierkantrohr, in dem konzentrisch ein rundes Innenrohr **15,** in der Regel eines der Enden **2**a, b des Trennbügels **2,** steckt, sodass zwischen dem Außenumfang des Innenrohres **15** und dem Innenumfang des Außenrohres **16** Platz vorhanden ist, um dazwischen Gummiblöcke **6** als rückstellendes, elastisches Element anzuordnen.

In der linken Bildhälfte der Figur **3**a ist der Gummiblock **6** halbschalenförmig ausgebildet, so dass er den Zwischenraum in der radialen Ebene insbesondere vollständig ausfüllt. In der rechten Hälfte sind einzelne quaderförmige oder plattenförmige Gummiblöcke **6** verwendet, die den Zwischenraum in der radialen Ebene insbesondere nicht vollständig ausfüllen, sondern links und rechts nur jeweils den geringsten Abstand zwischen den beiden Rohren ausfüllen.

Diese Bauform kann nur eingesetzt werden mit ihrer axialen Richtung **19** quer zur Schwenkachse **3** stehend, um die der Trennbügel **2** schwenkbar sein soll, also in einer im Wesentlichen horizontalen Ausrichtung der Rohr-in-Rohr-Anordnung. Denn bei senkrechter Anordnung wie etwa im unteren Bereich der Standsäule **10** wären die Gummiblöcke **6** wirkungslos und das Innenrohr **15** könnte sich problemlos um die axiale Richtung **19** bezüglich des Außenrohres **16** drehen.

Gleiches gilt für die Lösungen in den Figuren **3**b und **3**d:
Die Lösung der Figur **3**b unterscheidet sich von derjenigen der Figur **3**a lediglich dadurch, dass nur auf zwei einander gegenüberliegenden Seiten - jeweils parallel zu der Schwenkachse **3** - ein Gummiblock **6** eingesetzt ist, in diesem Fall in Form eines Quaders oder einer Platte, deren Dicke links und rechts der Schwenkachse **3** nur jeweils den geringsten Abstand zwischen den beiden Rohren ausfüllen.

Bei der Lösung gemäß Figur **3**d sind sowohl Innenrohr **15** als auch Außenrohr **16** Rundrohre, die konzentrisch zueinander angeordnet sind, sodass dazwischen ein - zum Beispiel einstückiger, ungeteilter - buchsenförmiger Gummiblock **6** eingesetzt werden kann, der den radialen Zwischenraum insbesondere ausfüllt.

Mit entsprechender Anpassung der Außenkontur der Gummiblöcke **6** könnten auch bei den Lösungen der Figur **3** a und b die Außenrohre **16** Rundrohre sein und/ oder die Innenrohre **15** einen polygonalen, insbesondere rechteckigen, Innenquerschnitt besitzen.

Bei der Lösung der Figur **3**c dagegen ist sowohl das Innenrohr **15** als auch das Außenrohr **16** ein Rohr mit polygonem, insbesondere gleichgestaltetem, nur unterschiedlich großem, Querschnitt, in diesem Fall ein quadratisches Vierkantrohr, wobei vorzugsweise die Außenkontur des Innenrohres **15** so groß ist, dass es sich nicht vollständig um die axiale Richtung **19** im Außenrohr **16** drehen lässt.

Zusätzlich wird dies verhindert durch die Rückstellelemente in Form von Gummiblöcken **6**, die in den Eckbereichen zwischen den beiden Rohren insbesondere als Winkelstücke eingesetzt sind.

Dies bewirkt, dass das Innenrohr **15** zum Außenrohr **16** sowohl beim Verschwenken um die eingezeichnete Schwenkachse **3,** die in irgendeiner Richtung quer zur Axialrichtung **19** verläuft, als auch um die axiale Richtung **19** als alternative Schwenkachse **3** selbst einen oder mehrere der Gummiblöcke **6** zusammenpresst, und durch die Elastizität des Gummimaterials bei Wegfall der Belastung wieder in die Ausgangslage zurückgedreht wird.

Diese Rohr-in-Rohr-Anordnung kann also als Rückstellvorrichtung sowohl mit mehr vertikaler als auch mit mehr horizontaler Ausrichtung der Axialrichtung **19** der Rohre eingesetzt werden.

Dagegen zeigen die Figuren **4**a, b Lösungen, die nur bei einer primär vertikalen Schwenkachse **3** einsetzbar sind, also beispielsweise im Verlauf oder am Fuße einer Standsäule **10.** Beide Lösungen sind wiederum in einer Bauform als Rohr-in-Rohr-Anordnung ausgeführt.

Bei der Lösung gemäß Figur **4**b verlaufen Innenrohr **15** und Außenrohr **16** wiederum konzentrisch zueinander im Wesentlichen vertikal, wobei die untere Stirnfläche des Innenrohres **15** beispielsweise mit einer Sockelplatte **11** zum Verschrauben gegenüber dem Untergrund verschweißt sein kann.

Im radialen Abstand zwischen den beiden befindet sich als elastisches Element eine Spiralfeder **7** als Drehfeder, die mit ihrem einen, zum Beispiel oberen, freien Ende **7**a mit dem Außenrohr **16** fest verbunden ist, in dem dieses Ende beispielsweise einen nach außen ragenden Zapfen aufweist, der in eine entsprechende Bohrung des Außenrohres **16** eingreift.

In einer analogen Weise kann das andere Ende **7**b einen nach innen weisenden Zapfen aufweisen, der in eine entsprechende Bohrung des Innenrohres **15** eingreift, und auf diese Art und Weise mit dem Innenrohr **15** drehfest verbunden ist.

Dadurch kann das Außenrohr **16** um die Axialrichtung **19** der Rohr-in-Rohr-Anordnung, die in diesem Fall die Schwenkachse **3** ist, verdreht werden und wird durch die Rückstellkraft der Drehfeder **7** wieder in die Ausgangslage zurückgestellt.

Im Gegensatz dazu wird bei der Lösung gemäß Figur **4**a die Rückstellkraft durch die Schwerkraft aufgebracht:
Auch hier verlaufen Innenrohr **15** und Außenrohr **16** konzentrisch zueinander im Wesentlichen vertikal, und das Innenrohr ist mit dem unteren Ende auf einer Sockelplatte **11** verschweißt.

Im Außenumfang des Innenrohres **15** ist eine beispielsweise V-förmige oder U-förmige Nut **22** eingearbeitet, die von ihrem tiefsten Punkt aus in beide Richtungen nach oben strebt.

Von dem Innenumfang des Außenrohres **16** steht ein Zapfen **23** in Richtung Innenrohr **15** soweit vor, dass er in die Nut **22** eingreift und auch nicht aus dieser radial herausrutschen kann. Der Zapfen **23** ist am Außenrohr **16** in einer solchen Drehposition angeordnet, dass sich das Außenrohr **16** in der gewünschten normalen Drehlage befindet, wenn der Zapfen **23** am tiefsten Punkt in der Nut **22** ruht.

Das Außenrohr **16** kann nun um die axiale Richtung **19** dieser Rohr-in-Rohr-Anordnung verdreht werden, wodurch der Zapfen **23** zwangsweise entlang eines Astes der Nut **22** nach oben läuft und damit das ganze Außenrohr **16** relativ zum Innenrohr **15** nicht nur verdreht, sondern auch angehoben wird. Sobald die Auslenkkraft nicht mehr vorhanden ist, rutscht schwerkraftbedingt der Zapfen **23** in der Nut **22** wieder zu deren tiefsten Punkt und analog damit das gesamte Außenrohr **16.**

Natürlich kann auch umgekehrt die Nut **22** im Innenumfang des Außenrohrs **16** eingearbeitet sein und der Zapfen **23** vom Innenrohr **15** nach außen ragen.

Die Figur **5** zeigt dagegen eine Rückstellvorrichtung, die wie bei Figur **4**b für das Aufbringen der Rückstellkraft eine Spiralfeder **7** benutzt, jedoch nicht als Rohr-in-Rohr-Anordnung ausgebildet ist, in einer Blickrichtung analog der Figuren **1**a und **2**:
Dabei sind rechts an den beiden Spiralfedern **7** die freien Enden **2**a, **2**b eines Trennbügels **2** zu erkennen, während zusätzlich an der oberen Feder **7** am linken Ende ebenfalls ein Ende **2** a eines anderen Trennbügels **2** ansetzt, der dann gegebenenfalls auch mit seinem anderen Ende **2** b mit der unteren Feder **7** verbunden ist.

Dabei steht die untere Spiralfeder **7,** bei denen es sich vorzugsweise um sehr eng, im Normalzustand ohne Abstand zwischen den Windungen gewickelte, Spiralfedern **7** handelt, mit vertikal verlaufenden Axialrichtung **19** mit ihrer unteren Stirnfläche auf einer Sockelplatte **11** auf und ist mit dieser fest verbunden, vorzugsweise verschweißt. Die Sockelplatte **11** weist wiederum in ihrem Überstand nach außen über die Feder **7** Durchgangslöcher **9** zum Verschrauben gegenüber dem Untergrund **20** auf.

Auf der oberen Stirnfläche der Spiralfeder **7** liegt horizontal das untere freie Ende **2**b oder die beiden unteren freien Enden **2** b zweier gegenüberliegender Trennbügel **2** auf und sind mit dieser oberen Stirnfläche fest verbunden, insbesondere verschweißt.

Dadurch kann der Trennbügel **2** um die Axialrichtung **19** der Spiralfeder **7** als Schwenkachse **3** verschwenkt werden.

Damit diese Bewegung auch vom oberen freien Ende **2**a des Trennbügels **2** vollzogen werden kann, sind die beiden oberen, gegeneinander weisenden freien Enden **2**a der zwei gegenüberliegenden Trennbügel **2** über eine obere Spiralfeder **7** miteinander verbunden, deren Axialrichtung mit der Axialrichtung der freien Enden **2**a fluchtet, sodass jedes der beiden freien Enden **2**a mit einem der stirnseitigen Enden, insbesondere mit einer der Stirnflächen, dieser oberen Spiralfeder **7** fest verbunden ist.

Das obere Ende **2**a des Trennbügels, und/oder die obere, liegende Spiralfeder **7** ist durch ein in Blickrichtung verlaufendes, nicht dargestelltes Nackenrohr **18** mit benachbart liegenden Einheiten verbunden.

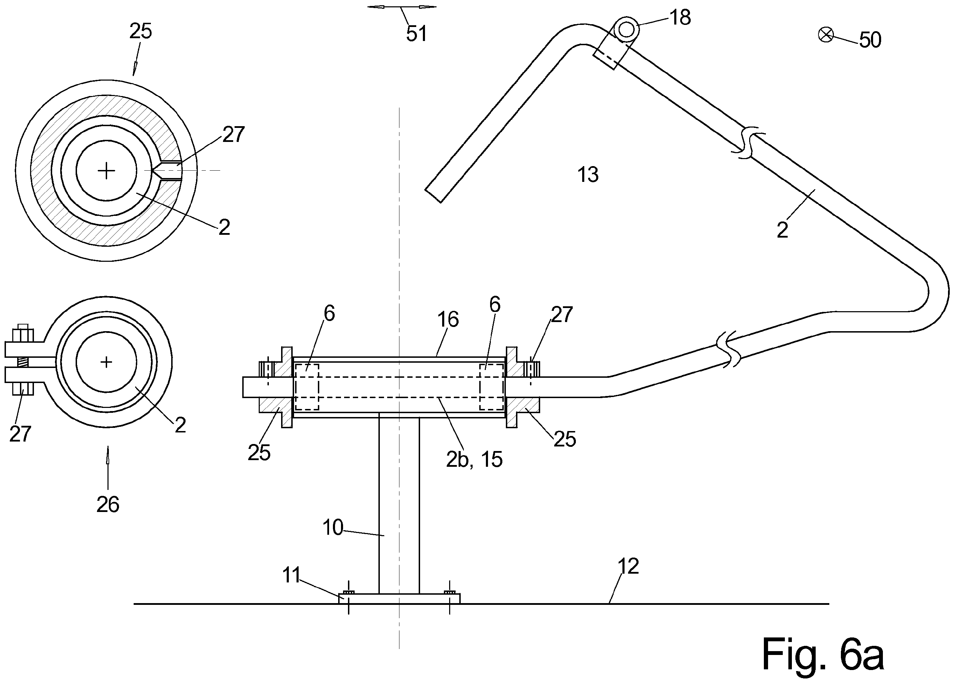

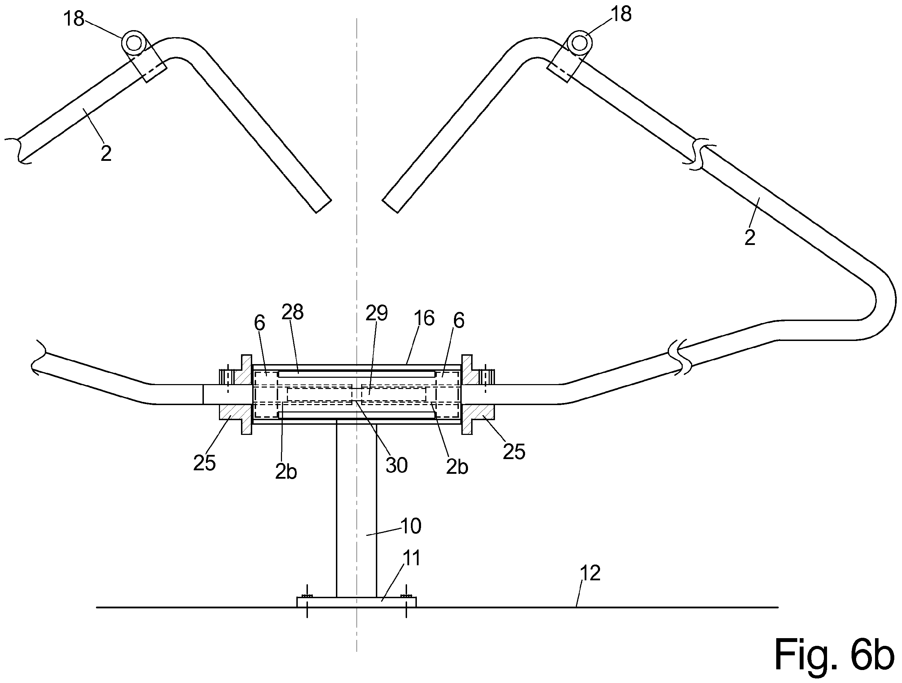

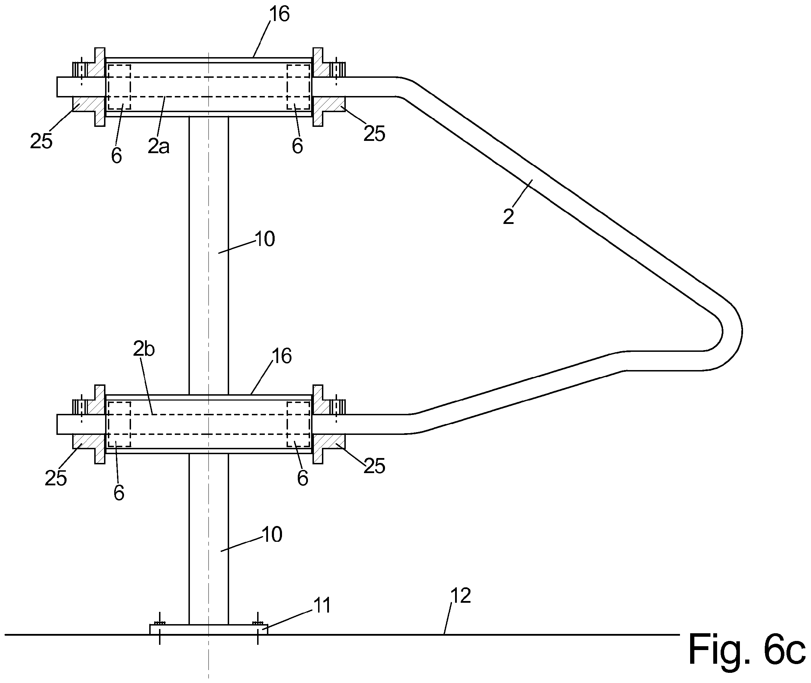

Eine weitere Bauform der Trennvorrichtung und eine gegenüber den bisherigen Darstellungen etwas andere Form der Rückstellvorrichtung **4** zeigen die Figuren **6**a-c:
Dabei zeigt Figur **6**a den Fall, dass von der Tragvorrichtung **5** in Form der Standsäule **10** nur einseitig ein Trennbügel **2** abragt, während in Figur **6**b nach beiden Seiten je ein Trennbügel **2** abragt.

In beiden Fällen ist das obere Ende des Trennbügels **2** der Trennvorrichtung **1** nicht einzeln mit einer Standsäule verbunden, sondern mit einem als obere Tragvorrichtung dienenden Nackenrohr **24,** welches in Längsrichtung **50** über mehrere in Blickrichtung der Figuren **6**a und **6**b hintereinander liegende Trennbügel **2** durchgeht und mit diesen fest verbunden ist. Die feste Verbindung kann eine Schweißstelle oder eine Rohrschelle sein, enthält jedoch keine Möglichkeit zum Verschwenken des Trennbügels gegenüber dem Nackenrohr **24** und einer analoger Rückstellvorrichtung, wie am unteren Befestigungspunkt des Trennbügels **2.**

Am unteren stirnseitigen Ende der Standsäule **10** ist eine Sockelplatte **11** verschweißt, die zumindest in zwei einander gegenüber liegenden Richtungen, vorzugsweise in allen Richtungen, über den Querschnitt der Standsäule **10** vorsteht und in diesem Überstand Durchgangsöffnungen zum Verschrauben dieser Sockelplatte **11** gegenüber dem Untergrund **12** aufweist.

Dagegen zeigt Figur **6**c eine Standsäule **10** als Tragvorrichtung **5,** die bis zur Höhe des oberen Endes des Trennbügels **2** durchgeht, und bei der oberes als auch unteres Ende des Trennbügels **2** verschwenkbar und mittels einer Rückstellvorrichtung **4** mit der Standsäule **10** verbunden sind, sodass hierbei in aller Regel kein zusätzliches Nackenrohr an dem oberen Ende des Trennbügels **2** vorhanden ist.

Die Ausbildung der Auslenk- und Rückstellvorrichtung **4** ist in allen Figuren die gleiche:
Es handelt sich prinzipiell um eine Rohr-in-Rohr-Anordnung, wie zuvor beschrieben, wobei das Innenrohr relativ zum Außenrohr um eine quer zur Erstreckungsrichtung der ineinander steckenden Rohrstücke verlaufenden, aufrecht stehenden, Schwenkachse **3** verschwenkbar ist, indem sich im radialen Abstand zwischen Innenrohr **15** und Außenrohr **16** jeweils ein elastisches Element, hier ein ringförmiger oder buchsenförmiger Gummiblock **6**, befindet, der den radialen Abstand vollständig ausfüllt.

Vorzugsweise besitzt der buchsenförmige Gummiblock **6**, dessen Außen und Innenkontur diejenigen des Außenrohres **16** und/oder Innenrohres **15** angepasst sein sollte und in diesem Fall jeweils rund ist, eine in axiale Richtung konische Gestalt mit einem Übermaß am breiten Ende gegenüber dem Innendurchmesser des Außenrohres **16** auf, so dass der Gummiblock **6** in das stirnseitige Ende des Außenrohres **16** axial eingepresst werden kann und dort der Gummiblock aufgrund seiner Vorspannung fest sitzt.

Wie Figur **6**a zeigt, ist das Außenrohr **16** horizontal verlaufend auf der oberen Stirnfläche des Standrohres **10** aufgeschweißt, und steht mit seinen beiden Enden beidseits über das Standrohr **10** vor.

Bei der Ausführungsform gemäß Figur **6**a steckt das untere Ende **2**b des Trennbügels **2** so weit in dem Außenrohr **16,** dass es dieses in Längsrichtung vollständig durchläuft und auf der Gegenseite so weit vorsteht, dass an beiden stirnseitigen Enden des Außenrohres **16** jeweils als Ausziehsicherung das Rohr des Trennbügels **2** umgebend eine Muffe **25** oder eine Rohrschelle **26** angeordnet werden kann.

Wie in Figur **6**a im Detail - betrachtet in Längsrichtung der Rohr-in-Rohr-Anordnung - dargestellt, besteht die Muffe **25** aus einem Ring mit einem Außendurchmesser, der größer ist als der Innendurchmesser des Außenrohres **16** und vorzugsweise im Querschnitt die Muffe **25** L-förmig ist, wobei durch die Muffe **25** von außen nach innen hindurch eine Gewindebohrung vorhanden ist, in die eine Klemmschraube **27,** vorzugsweise eine Madenschraube, eingeschraubt und am Außenumfang des Trennbügels **2** verklemmt werden kann.

Bei der Rohrschelle **26** erfolgt die Befestigung am Außenumfang des Trennbügels **2** durch tangentiales Gegeneinander-Spannen der Enden der Ωförmigen Rohrschelle **26,** deren beide, insbesondere radial abstrebende, Enden von einer Klemmschraube **27** durchdrungen wird.

Dadurch ist das Innenrohr kraftschlüssig in seiner axialen Lage im Außenrohr fixiert.

Der untere Schenkel des U-förmigen Trennbügels **2** verläuft vorzugsweise nicht über die gesamte Erstreckung horizontal, sondern ist S-förmig doppelt gekröpft, sodass das im Außenrohr **16** steckende Ende des Trennbügels **2** dessen tiefstes Niveau darstellt.

Der obere Schenkel verläuft vorzugsweise von seiner von der Standsäule 10 entfernten endseitigen Biegung nach oben ansteigend, mit einer Kröpfung um annähernd 90° nach unten im Endbereich dieses oberen Schenkels.

Das freie Ende des oberen Schenkels endet vorzugsweise oberhalb des Längenbereiches des Außenrohres **16.**

Das freie Ende des oberen Schenkels endet vorzugsweise oberhalb des Längenbereiches des Außenrohres **16.**

Das Nackenrohr **18** ist an dem oberen Schenkel nahe des höchsten Punktes des Trennbügels **2** befestigt.

Zwischen Außenrohr **16** und Innenrohr **15** befindet sich jeweils im Endbereich des Außenrohres **16** ein hülsenförmiger Gummiblock **6,** der den radialen Zwischenraum zwischen Innenrohr **15** und Außenrohr **16** im Wesentlichen ausfüllt. Beim seitlichen Auslenken des Trennbügels **2,** insbesondere dessen unteren Schenkels, wird der buchsenförmige Gummiblock **6** an einer Stelle radial zusammengepresst, sodass die Elastizität des Gummiblocks an dieser Stelle die Rückstellkraft für das Zurückstellen des Trennbügels **2** in die Normallage darstellt.

**Figur 6b** zeigt im Gegensatz zur **Figur 6a** eine Lösung, bei der von der Standsäule 10 nach beiden Seiten jeweils ein **Trennbügel 2** abragt.

Der Unterschied gegenüber **Figur 6a** besteht darin, dass die beiden Ende **2b** der beiden Trennbügel **2** das Außenrohr **16** nicht vollständig in seiner Länge durchlaufen, sondern nur etwa bis zur Längs-Mitte des Außenrohres **16** und damit insbesondere der Standsäule **10** reichen und sich dort eventuell berühren.

Bei dieser Lösung ist vorzugsweise dennoch nur in jedem Endbereich des Außenrohres **16** ein hülsenförmiger Gummiblock **6** vorhanden.

Damit sich das untere Ende eines der Trennbügel **2** bei seitlicher Belastung nicht allzu sehr auslenken kann, stehen mehrere Möglichkeiten zur Verfügung, die auch miteinander kombiniert werden können:
Die eine Möglichkeit besteht darin, im Außenrohr **16** weiter innen, nahe des Endes des jeweiligen Trennbügels **2,** einen die beiden Enden übergreifenden oder je einen weiteren solchen Gummiblock **6** anzuordnen.

Die andere Möglichkeit besteht darin, ein in die beiden Enden **2b** hineinragendes Verbindungsrohr **30** anzuordnen, welches gerade in die beiden gegeneinander gerichteten Enden **2b** der beiden Trennbügel **2** hineinpasst, und mit einem der beiden Enden **2b** fest verbunden ist, beispielsweise über einen Spannstift **29.**

Die an jedem Trennbügel **2** nur noch eine anliegende Muffe **25** oder Rohrschelle **26** sichert somit nur noch gegen ein weiteres Hineinschieben in das Außenrohr 16, während das vollständige Herausziehen aus dem Innenrohr **15** verhindert wird durch die Verbindung mit dem Nackenrohr **18** am oberen Ende.

**Figur 6c** zeigt die Bauform **ähnlich** **Figur 6a****.**

Dabei ist das Ende des oberen Schenkels des Trennbügels **2** ebenfalls horizontal verlaufend angeordnet und beide Enden **2a, b** stecken jeweils in einem an der Außenrohre **16** der nun bis zum oberen Ende des Trennbügels **2** durchgehenden Standsäule **10,** und durchdringen diese Außenrohre **16,** sodass die bei **Figur 6a** unten dargestellte Ausschwenk- und Rückstellvorrichtung **4** an beiden Enden des Trennbügels **2** verwirklicht ist.

Beide Außenrohre **16** sind mit der Standsäule **10** vorzugsweise verschweißt.

### BEZUGSZEICHENLISTE

- 1: Trennvorrichtung
- 2: Trennbügel
- 2a,b: freies Ende
- 3: Schwenkachse
- 4: Rückstellvorrichtung
- 5: Tragvorrichtung
- 6: Gummiblock
- 7: Feder
- 8: Deckel
- 9: Durchgangsloch
- 10: Standsäule
- 11: Sockelplatte
- **12**: Untergrund
- **13**: vertikale Ebene
- **14**: Symmetrieebene
- **15**: Innenrohr
- **16**: Außenrohr
- **17**: Versteifungsringe
- **18**: Nackenrohr
- **19**: axiale Richtung
- **20**: Untergrund
- **21**: Box
- **22**: Nut
- **23**: Zapfen
- **24**: Nackenrohr
- **25**: Muffe
- **26**: Rohrschelle
- **27**: Klemmschraube
- **28**: Distanzrohr
- **29**: Spannstift
- **30**: Verbindungsrohr
- **50**: Längsrichtung
- **51**: Querrichtung

## Patentansprüche

1. Trennvorrichtung für die Abtrennung der Boxenplätze von Großvieh, insbesondere Kühen, mit
a) einem Trennbügel (**2**), der in einer vertikalen Ebene (**13**) verläuft,
b) einer Tragvorrichtung (**5**), die gegenüber dem Untergrund (**20**) fixiert ist und **den** mindestens einen Trennbügel (**2**) trägt, wobei
c) der Trennbügel (**2**) bei seitlicher, primär horizontaler, Kraftbeaufschlagung begrenzt verschwenkbar aus seiner Normallage ist gegenüber der Tragvorrichtung (**5**) um eine aufrecht stehende Schwenkachse (**3**),
d) eine Rückstellvorrichtung (**4**) vorhanden ist zum Zurückstellen des verschwenkten Trennbügels (**2**) in die Normallage,
e) in der Rückstellvorrichtung (**4**) die in die Normallage rückstellende Kraft von einem in diese Richtung elastischen Element aufgebracht wird,
f) die Rückstellvorrichtung (**4**) eine Rohr-in-Rohr-Anordnung mit mit radialem Abstand ineinander gesteckten Rohren umfasst, und in dem Abstand das elastische Element angeordnet ist, bei der das Innenrohr (**15**) relativ zum Außenrohr (**16**) unter Verformung des elastischen Elements verschwenkbar ist,
g) das eine Rohr Bestandteil der Tragvorrichtung (5) ist,
**dadurch gekennzeichnet, dass**
h) das Innenrohr (15) relativ zum Außenrohr (16) um eine dazu querstehende Schwenkachse (3) verschwenkbar ist,
i) das Innenrohr (15) Bestandteil des Trennbügels (2) ist,
k) das Außenrohr (16) und das Innenrohr (15) horizontal verlaufen und seitlich als auch oben und unten zwischen Außenrohr (16) und Innenrohr (15) das wenigstens eine elastische Element angeordnet ist,
l) der radiale Zwischenraum zwischen Innenrohr (15) und Außenrohr (16) an der Stirnseite des Außenrohres (16) mittels eines Deckels (8) abgedeckt ist.

2. Trennvorrichtung nach Anspruch **1**,
die Tragvorrichtung (**5**) gegenüber dem Untergrund (**20**) verschraubt ist, insbesondere indem die Tragvorrichtung (**5**) an ihrem unteren Ende eine horizontale Sockelplatte (**11**) mit Durchgangslöchern (**9**) aufweist.

3. Trennvorrichtung nach einem der vorhergehenden Ansprüche,
**dadurch gekennzeichnet, dass**
das elastische Element ein Gummiblock **(6)** ist.

4. Trennvorrichtung nach Anspruch **3**,
**dadurch gekennzeichnet, dass**
der Gummiblock **(6)** hülsenförmig ausgebildet ist, mit insbesondere runder Außenkontur, wobei in axialer Richtung die Außenkontur vorzugsweise konisch ausgebildet ist.

5. Trennvorrichtung nach einem der vorhergehenden Ansprüche,
**dadurch gekennzeichnet, dass**
bei Ausbildung der Tragvorrichtung (**5**) als Standsäule (**10**), die bis zur Höhe des oberen Endes des Trennbügels (**2**) hinauf reicht, bei einem Trennbügel (2) mit zwei freien Enden (**2**a, b) zwischen jedem freien Ende (**2a, b**) und der Tragvorrichtung (**5**) **je** eine Rückstellvorrichtung (**4**) angeordnet ist.

6. Trennvorrichtung nach einem der vorhergehenden Ansprüche,
**dadurch gekennzeichnet, dass**
zwischen den beiden Rohrstücken der Rohr-in-Rohr-Anordnung eine Ausziehsicherung gegen Herausziehen des einen Rohrstückes aus dem anderen in deren axialer Richtung vorhanden ist, insbesondere in Form einer Verschraubung, und die Ausziehsicherung abseits des elastischen Elementes angeordnet ist.

7. Trennvorrichtung nach einem der vorhergehenden Ansprüche,
**dadurch gekennzeichnet, dass**
der Deckel (**8**) als Ausziehsicherung ausgebildet ist.

8. Trennvorrichtung nach einem der vorhergehenden Ansprüche,
**dadurch gekennzeichnet, dass**
das Außenrohr (**16**) einen polygonen, insbesondere rechteckigen, Querschnitt besitzt und vorzugsweise das Innenrohr einen runden oder an die Polygonform des Außenrohres angepassten, kleineren, analog geformten, polygonen Querschnitt aufweist.

9. Trennvorrichtung nach einem der vorhergehenden Ansprüche,
**dadurch gekennzeichnet, dass**
- die Tragvorrichtung (**5**) eine Standsäule (**10**) ist, auf deren oberen stirnseitigen Ende das Außenrohr (**16**) aufgeschweißt ist und
- wobei das untere Ende des Trennbügels das Innenrohr bildet. Sodass die Tragvorrichtung (**5**) auf der Höhe des unteren Endes des Trennbügels (**2**) endet.

10. Trennvorrichtung nach Anspruch 3 oder 4, **dadurch gekennzeichnet, dass**
von dem hülsenförmigen Gummiblock (**6**) sich jeweils nur einer nahe des stirnseitigen Endes im Außenrohr (**16**) befindet.

11. Trennvorrichtung nach Anspruch 5 oder 9, **dadurch gekennzeichnet, dass**
das Außenrohr (**16**) beidseits über die Standsäule (**10**) vorsteht.

12. Trennvorrichtung nach Anspruch 6, **dadurch gekennzeichnet, dass**
als Ausziehsicherung an dem Trennbügel (**2**), anliegend an der Stirnseite des Außenrohres,
- entweder eine Muffe mit radial gegen den Trennbügel (**2**) festziehbarer Klemmschraube (**27**), insbesondere einer Madenschraube,
- oder eine geschlitzte, radial gegen den Trennbügel (**2**) zusammenspannbare Rohrschelle (**26**) umgibt.

13. Trennvorrichtung nach einem der vorhergehenden Ansprüche,
**dadurch gekennzeichnet, dass**
am oberen Ende des Trennbügels (**2**) in Längsrichtung (**50**) verlaufend ein Nackenrohr (**18**) befestigt ist, welches insbesondere über eine Vielzahl in Längsrichtung (**50**) nebeneinander angeordnete Trennbügel (**2**) hinweg verläuft.

14. Trennvorrichtung nach Anspruch 10, **dadurch gekennzeichnet, dass** das elastische Element zwei hülsenförmigen Gummiblöcke und zwischen den beiden hülsenförmigen Gummiblöcken (**6**) ein Abstandshalter, insbesondere ein Distanzrohr (**28**), angeordnet ist.

15. Trennvorrichtung nach einem der vorhergehenden Ansprüche,
**dadurch gekennzeichnet, dass**
- bei nur einseitig von der Tragvorrichtung **(5)** abragendem Trennbügel (**2**) das untere Ende des Trennbügels (**2**) das Außenrohr (**16**) vollständig durchläuft,
- bei beidseitig von der Tagvorrichtung (**5**) abragenden Trennbügeln (**2**) das untere Ende des Trennbügels (**2**) vor der Längsmitte des Außenrohres endet und insbesondere ein Verbindungsrohr (**30**) mit seinen beiden Enden in jeweils einem gegeneinander gerichteten unteren Enden eines der beiden Trendbügel (**2**) gesteckt und mit einem der Enden fest verbunden ist.

## Claims

1. A divider for separating stalls for large cattle, in particular cows, the divider comprising:
a) a divider bar (2) that extends in a vertical plane (13);
b) a support device (5) that is fixed relative to a ground (20) and that supports the at least one divider bar (2),
wherein
c) the at least one divider bar (2) is pivotable within limits from a normal position relative to the support device (5) about a vertical pivot axis (3) upon lateral, primarily horizontal force loading,
d) a reset device (4) is provided for resetting the at least one pivoted divider bar (2) into the normal position,
e) a force resetting into the normal position is applied in the reset device (4) by an element that is elastic in this direction,
f) the reset device (4) includes a tube in tube arrangement including tubes that are inserted into each other with a radial gap and wherein the elastic element is arranged in the radial gap so that the inner tube (15) is pivotable relative to the outer tube (16) deforming the elastic element,
g) either tube forms a component of the support device (5),
**characterized in that**
h) the inner tube (15) is pivotable relative to the outer tube (16) relative a transversal pivot axis (3),
i) the inner tube (15) forms a part of the divider bar (2),
k) the outer tube (16) and the inner tube (15) extend horizontally and the at least one elastic element is arranged laterally and on top and at a bottom between the outer tube (16) and the inner tube (15),
l) the radial gap between the inner tube (15) and the outer tube (16) is covered by a cover (8) at a face of the outer tube (16).

2. The divider according to claim 1,
**characterized in that**
the support device (5) is bolted to the ground (20), in particular **in that** the support device (5) includes a horizontal base plate (11) with pass through holes (9) at a lower end of the support device.

3. The divider according to one of the preceding claims,
**characterized in that**
the elastic element is a rubber block (6).

4. The divider according to claim 3,
**characterized in that**
the rubber block (6) is configured sleeve shaped, in particular with a circular outer contour, wherein the circular outer contour is advantageously configured conical in an axial direction.

5. The divider according to one of the preceding claims,
**characterized in that**
the support device (5) is configured as a standing column (10) that reaches up to a level of the upper end of the divider bar (2), the divider bar (2) includes two free ends (2a, b), a respective reset device (4) is arranged between each free end (2a, b) and the support device (5).

6. The divider according to one of the preceding claims,
**characterized in that**
a pull out safety is provided between both tubular elements of the tube in tube arrangement wherein the pull out safety prevents a pull out of one tubular element from another tubular element in the axial direction wherein the pull out safety is provided in particular as a threaded connection and the pull out safety is arranged remote from the elastic element.

7. The divider according to one of the preceding claims,
**characterized in that**
the cover (8) is provided as a pull out safety.

8. The divider according to one of the preceding claims,
**characterized in that**
the outer tube (16) has a polygonal, in particular rectangular cross section and the inner tube advantageously has a circular cross section or a smaller analogously shaped polygonal cross section which is adapted to the polygonal shape of the outer tube.

9. The divider according to one of the preceding claims,
**characterized in that**
- the support device (5) is a standing column (10) wherein an outer tube (16) is welded to an upper face end of the standing column, and
- wherein the lower end of the divider bar forms the inner tube, so that the support device (5) terminates at a level of the lower end of the divider bar (2).

10. The divider according to claim 3 or 4,
**characterized in that**
only one sleeve shaped rubber block (6) is arranged proximal to a face end in the outer tube (16).

11. The divider according to claim 5 or 9,
**characterized in that**
the outer tube (16) protrudes on both sides beyond the standing column (10).

12. The divider according to claim 6,
**characterized in that**
at the divider bar (2) in contact with the face of the outer tube the following is provided as a pull-out safety;
- either a grommet with a clamping screw (27), in particular a set screw, that is radially tightable against the divider bar (2),
- or a slotted tube clamp envelops the divider bar (2) wherein the tube clamp (26) is clampable against the divider bar (2).

13. The divider according to one of the preceding claims,
**characterized in that**
a neck tube (18) that extends in a longitudinal direction (50) is attached at an upper end of the divider bar (2), wherein the neck tube extends in particular over a plurality of divider bars (2) that are arranged in the longitudinal direction (50) adjacent to one another.

14. The divider according to claim 10,
**characterized in that**
the elastic element includes two sleeve shaped rubber blocks and a spacer, in particular a spacer tube (28) is arranged between the two sleeve shaped rubber blocks (6).

15. The divider according to one of the preceding claims,
**characterized in that**
- a lower end of the divider bar (2) extends completely through the outer tube (16) when the divider bar (2) extends from the support device (5) only on one side,
- when divider bars (2) extend from the support device (5) on both sides a lower end of the divider bar (2) terminates in front of a longitudinal center of the outer tube and in particular a connector tube (30) is inserted with both ends into one opposing lower end of one of the two divider bars (2) and is attached at one of the ends.

## Revendications

1. Dispositif de séparation de boxes pour le bétail en particulier des vaches, avec
a) un portillon de séparation (2) qui s'étend dans un plan vertical (13),
b) un dispositif de support (5) qui est fixé par rapport au sol (20) et porte au moins le portillon de séparation (2),
c) le portillon de séparation (2) étant pivotant de manière limitée par application d'une force latérale horizontale primaire depuis sa position normale par rapport au dispositif de support (5) autour d'un axe de pivotement vertical (3),
d) un dispositif de rappel (4) étant prévu pour ramener le portillon de séparation (2) en position normale,
e) la force de rappel en position normale étant appliquée dans le dispositif de rappel (4) par un élément qui est élastique dans cette direction,
f) le dispositif de rappel (4) comprenant un dispositif tubulaire avec des tubes enclenchés les uns dans les autres espacés radialement, et l'élément élastique étant disposé dans cet espacement, le tube interne (15) étant pivotant par rapport au tube externe (16) sous la déformation de l'élément élastique,
g) l'un des tubes faisant partie du dispositif de support (5),
**caractérisé en ce que**
h) le tube interne (15) est pivotant par rapport au tube externe (16) autour d'un axe de pivotement (3) vertical,
i) le tube interne (15) fait partie du portillon de séparation (2),
k) le tube externe (16) et le tube interne (15) s'étendent horizontalement et au moins un élément élastique est disposé latéralement ainsi qu'en haut et en bas entre le tube externe (16) et le tube interne (15),
l) l'espace intermédiaire radial entre le tube interne (15) et le tube externe (16) est couvert sur la face frontale du tube externe (16) par un couvercle (8).

2. Dispositif de séparation selon la revendication 1,
**caractérisé en ce que**
le dispositif de support (5) est vissé au sol (20), en particulier dans le fait que le dispositif de support (5) présente à son extrémité inférieure une plaque de socle horizontale (11) avec des trous taraudés (9).

3. Dispositif de séparation selon l'une des revendications précédentes,
**caractérisé en ce**
**que** l'élément élastique est un bloc de caoutchouc (6).

4. Dispositif de séparation selon la revendication 3,
**caractérisé en ce**
**que** le bloc de caoutchouc (6) est en forme de manchon, présente un contour externe en particulier rond, le contour externe étant réalisé de préférence de forme conique dans la direction axiale.

5. Dispositif de séparation selon l'une des revendications précédentes,
**caractérisé en ce**
**que** pour la réalisation du dispositif de support (5) en tant que colonne verticale (10) qui s'élève jusqu'à hauteur de l'extrémité supérieure du portillon de séparation (2), un dispositif de rappel (4) est disposé entre chaque extrémité (2a, b) et le dispositif de support (5) dans le cas d'un portillon de séparation (2) avec deux extrémités libres (2a, b).

6. Dispositif de séparation selon l'une des revendications précédentes,
**caractérisé en ce**
**qu'**entre les deux parties tubulaires agencées de tube-en-tube, il est prévu une sécurité télescopique d'extraction contre la sortie d'un tube de l'autre tube dans leur direction axiale, en particulier sous forme d'un vissage et la sécurité d'extraction est disposée à distance de l'élément élastique.

7. Dispositif de séparation selon l'une des revendications précédentes,
**caractérisé en ce**
**que** le couvercle (8) est réalisé comme une sécurité d'extraction.

8. Dispositif de séparation selon l'une des revendications précédentes,
**caractérisé en ce**
**que** le tube externe (16) présente une section polygonale, en particulier rectangulaire et de préférence le tube interne présente une section transversale ronde ou polygonale plus petite, de forme analogue, adaptée à la forme polygonale du tube externe.

9. Dispositif de séparation selon l'une des revendications précédentes,
**caractérisé en ce**
- **que** le dispositif de support (5) est une colonnette (10) sur l'extrémité supérieure frontale de laquelle est soudé le tube externe (16) et
- l'extrémité du portillon de séparation forme le tube interne, de sorte que le dispositif de support (5) se termine à la hauteur de l'extrémité inférieure du portillon de séparation (2).

10. Dispositif de séparation selon la revendication 3 ou 4,
**caractérisé en ce**
**qu'**un seul bloc de caoutchouc (6) en forme de manchon se trouve respectivement à proximité de l'extrémité frontale dans le tube interne (16).

11. Dispositif de séparation selon la revendication 5 ou 9,
**caractérisé en ce**
**que** le tube externe (16) fait saillie de part et d'autres de la colonnette verticale (10).

12. Dispositif de séparation selon la revendication 6,
**caractérisé en ce**
**qu'**il est utilisé en tant que sécurité d'extraction se trouvant sur le portillon de séparation (2), appliquée contre la face frontale du tube externe,
- soit un manchon avec une vis de serrage (27) serrable contre le portillon de séparation (2), en particulier une vis de serrage sans tête,
- soit un collier de serrage (26) fendu et pressable radialement contre le portillon de séparation (2).

13. Dispositif de séparation selon l'une des revendications précédentes,
**caractérisé en ce**
**qu'**il est sur l'extrémité supérieure du portillon de séparation (2) s'étendant dans la direction longitudinale (50), une lisse avant (18), qui s'étend en particulier au-delà d'un grand nombre de portillons de séparation (2) disposés les uns à côté des autres dans la direction longitudinale (50).

14. Dispositif de séparation selon la revendication 10,
**caractérisé en ce**
**que** l'élément élastique est constitué par deux blocs de caoutchouc en forme de manchon et un écarteur en particulier un tube d'espacement (28) est disposé entre les deux blocs de caoutchouc (6) en forme de manchon.

15. Dispositif de séparation selon l'une des revendications précédentes,
**caractérisé en ce que**
- pour un portillon de séparation (2) faisant saillie du dispositif de support (5) seulement sur un côté, l'extrémité inférieure du portillon de séparation (2) traverse complétement le tube externe (16),
- pour des portillons de séparation (2) faisant saillie du dispositif de support (5) des deux côtés, l'extrémité inférieure de portillon de séparation (2) se termine avant le milieu longitudinal du tube externe et en particulier un tube de connexion (30) est introduit par ses deux extrémités dans une extrémité inférieure opposée d'un des deux portillons de séparation (2) et est relié fixement à l'une des extrémités.
